Europäisches Patentamt

European Patent Office

Office européen des brevets

(11) Numéro de publication: **0 112 777**
**A1**

(12) **DEMANDE DE BREVET EUROPEEN**

(21) Numéro de dépôt: **83402502.5**

(22) Date de dépôt: **21.12.83**

(51) Int. Cl.³: **F 16 K 11/06,** F 16 K 31/60

(30) Priorité: **24.12.82 FR 8221766**

(43) Date de publication de la demande: **04.07.84**
**Bulletin 84/27**

(84) Etats contractants désignés: **AT BE CH DE FR GB IT LI LU NL SE**

(71) Demandeur: **SOCIETE DES ETABLISSEMENTS RENE TRUBERT, 194, Avenue Général Leclerc, F-78220 Viroflay (FR)**
Demandeur: **AXINOVE, 88 avenue du Général de Gaulle, F-92130 Issy-les-Moulineaux (FR)**

(72) Inventeur: **Barreau, Michel, 47 Rue R. Marcheron, F-92110 Vanves (FR)**
Inventeur: **Trubert, Denis, 6 Avenue du Général Gouraud, F-78220 Viroflay (FR)**

(74) Mandataire: **Corre, Jacques Denis Paul et al, Cabinet Regimbeau 26, Avenue Kléber, F-75116 Paris (FR)**

(54) **Dispositif de commande d'un robinet mélangeur notamment d'un robinet mélangeur à plaques.**

(57) La présente invention concerne un dispositif de commande d'un robinet mélangeur de fluides qui comprend une glissière support (30) rectiligne, fixe, solidaire du corps de robinet, qui guide en translation un tiroir (60) adapté pour supporter un bouton de commande, libre de rotation autour d'un axe normal à la direction longitudinale de la glissière (30), mais lié en translation avec le tiroir (60) et des moyens d'actionnement (100, 103) intercalés entre le bouton de commande et un levier de commande du mélangeur, adaptés pour solliciter un premier mouvement du levier lorsque le bouton de commande et le tiroir sont déplacés en translation le long de la glissière (30) et pour solliciter un second mouvement lorsque le bouton de commande est pivoté, par rapport au tiroir (60), autour de son axe de rotation.

0112777

# DISPOSITIF DE COMMANDE D'UN ROBINET MELANGEUR NOTAMMENT D'UN ROBINET MELANGEUR A PLAQUES.

La présente invention concerne le domaine des robinets mélangeurs de fluides, notamment d'eau.

La présente invention concerne plus précisément un dispositif de commande d'un robinet mélangeur de fluides du type comprenant un corps qui définit une chambre de mélange et qui comporte des orifices d'entrée reliés à des conduits respectifs d'alimentation en fluides, et un orifice de sortie relié à un conduit d'évacuation, ledit corps logeant, interposé entre les orifices d'entrée et l'orifice de sortie, un élément mobile apte à définir un recouvrement variable des orifices, lié au déplacement de l'organe mobile induit par un levier de commande articulé sur le corps de robinet, pour régler le débit de fluide dans le conduit d'évacuation lorsque un premier type de mouvement du levier est sollicité et pour régler le rapport de mélange de fluides dans ledit conduit d'évacuation lorsque un second type de mouvement du levier est sollicité.

La présente invention concerne en particulier un dispositif de commande de robinets mélangeurs du type précité, dits à plaques.

Les systèmes mélangeurs à plaques sont bien connus en eux-mêmes. Ces systèmes sont couramment dénommés "mitigeurs".

De tels systèmes mélangeurs à plaques sont en particulier décrits et/ou représentés dans les brevets des Etats-Unis d'Amérique 2 503 881 et 2 601 966 ainsi que dans les brevets ou demandes de brevet Français 1 470 000, 2 199 387, 2 403 502, 2 415 769, 2 466 689, 2 466 692 et 2 505 009, 2 400 654, 2 208 499, 2 499 664 en ce qui concerne les systèmes utilisant des plaques planes, ou encore dans les brevets Français 2 350 529 et 2 301 756 en ce qui concerne les systèmes utilisant des plaques incurvées, d'enveloppe généralement sphérique ou cylindrique.

On se reportera utilement à ces documents pour la bonne compréhension de la présente invention.

D'une façon générale, ces systèmes mélangeurs comprennent une plaque fixe solidaire du corps de robinet et une plaque mobile en appui contre la plaque fixe.

Chacune des plaques est munie d'ouvertures dont le recouvrement est susceptible d'être modifié par déplacement de la plaque mobile grâce au levier de commande.

Dans la majorité des cas, la plaque fixe comporte deux orifices d'entrée reliés respectivement à des conduits respectifs d'arrivée de fluide, par exemple un fluide chaud et un fluide froid, ainsi qu'un orifice de sortie relié à un conduit d'évacuation tandis que la plaque mobile comporte au moins un orifice dont la position, déterminée par le déplacement de la plaque mobile, définit la section ouverte de chacun des orifices de la plaque fixe.

D'une façon plus précise, la présente invention concerne un dispositif de commande des robinets mélangeurs du type précité dans lesquels la géométrie des orifices d'entrée et de l'élément mobile est adaptée de telle sorte que d'une part la section ouverte cumulée des orifices d'entrée soit constante mais le rapport des sections ouvertes respectives de ces orifices soit modifié lorsqu'un mouvement prédéterminé du levier de commande associé est induit, d'autre part le rapport entre les sections ouvertes des orifices d'entrée soit constant mais la section ouverte cumulée de ces orifices soit modifiée, lorsque un autre mouvement prédéterminé du levier de commande est induit.

Ainsi, lesdits mouvements prédéterminés du levier de commande permettent respectivement de régler, à débit constant, le rapport de mélange de fluides, donc pas exemple la température du fluide en sortie et, à rapport de mélange constant, le débit du fluide en sortie.

Les systèmes mélangeurs commercialisés comportent généralement un levier de commande articulé sur une rotule intermédiaire, ou sur une articulation à axe unique, portée par le corps du robinet.

Un bras du levier de commande en saillie d'un côté de la rotule ou de l'articulation coopère directement ou indirectement avec l'élément mobile tandis qu'un bras opposé du levier fait saillie en dehors du corps de robinet.

Selon un premier type d'agencement évoqué par exemple dans le brevet Français 2 199 387, les deux mouvements précités du levier de commande correspondent à des basculements dans des plans respectifs perpendiculaires entre eux et normaux au plan moyen de l'élément mobile, les mouvements de ce dernier induits en conséquence étant des translations respectives dans des directions coïncidant avec les plans de basculement du levier. Ce premier type d'agencement utilise généralement des plaques planes. Selon un second type d'agencement également connu de l'homme de l'art, les deux mouvements précités du levier de commande correspondent, l'un à un basculement du levier de commande dans un plan normal au plan moyen de l'élément mobile, l'autre à une rotation autour de son axe longitudinal ; les mouvements de l'élément mobile induits en conséquence sont alors formés respectivement d'une translation et d'un pivotement. Ce second type d'agencement utilise

4

0112777

plutôt des plaques incurvées.

Différents dispositifs de commande de déplacement du levier ont déjà été proposés.

Le mode de réalisation le plus simple consiste à prévoir un organe de préhension en prise directe avec le levier de commande, comme cela est décrit dans les brevets Français 2 208 499, 2 199 387, 2 400 654, 2 466 692 et 2 466 689.

Le réglage du rapport de mélange et du débit de fluide en sortie du robinet mélangeur est alors opéré par déplacement de l'organe de préhension dans l'espace.

Toutefois, il s'avère dans la pratique que ces dispositions ne permettent pas de régler aisément l'un des paramètres, débit ou rapport de mélange, sans influer sur l'autre.

Par ailleurs, les organes de préhension jusqu'ici proposés sont à la fois peu satisfaisants sur le plan esthétique ainsi que encombrants et gênants en raison du déplacement par basculement requis lors du réglage.

On a tenté de remédier à ces inconvénients, en particulier en ce qui concerne la sensibilité du réglage, en proposant des dispositifs de commande comportant deux organes de commande séparés servant l'un à régler le débit de fluide à rapport de mélange constant, l'autre le rapport de mélange, à débit constant.

De tels dispositifs sont par exemple décrits dans les brevets Français 2 350 529, 2 301 756, 2 415 769 et 2 403 502.

Comme cela ressort de l'examen de ces documents ces dispositifs font cependant largement saillie par rapport à la surface extérieure, généralement plane du support de robinet, formé par exemple d'une cuvette de lavabo ou de baignoire. De ce fait, là encore ces dispositifs de commande sont encombrants et gênants.

Les Demanderesses viennent maintenant proposer un nouveau dispositif de commande de robinet mélangeur plus compact et mieux intégré sur le plan esthétique aux modules supports des robinets, notamment lors de l'utilisation pour robinets de toilettes.

Pour cela, le dispositif de commande selon l'invention comprend :

- une glissière support rectiligne, fixe, solidaire du corps de robinet, qui guide en translation
- un tiroir adapté pour supporter
- un bouton de commande, libre de rotation autour d'un axe normal à la direction longitudinale de la glissière, mais lié en translation avec le tiroir, et
- des moyens d'actionnement intercalés entre le bouton de commande et le levier de commande, adaptés pour solliciter l'un des mouvements du levier lorsque le bouton de commande et le tiroir sont déplacés en translation le long de la glissière et pour solliciter l'autre mouvement lorsque le bouton de commande est pivoté, par rapport au tiroir, autour de son axe de rotation.

Il en résulte que le dispositif de commande selon l'invention se présente sous la forme d'un bouton unique déplacable par glissement sur le support de robinet, généralement parallèlement à celui-ci.

Le dispositif est de ce fait peu encombrant et peu gênant.

De plus, l'esthétique du bouton de commande peut par conséquent être aisément étudiée pour s'harmoniser avec l'environnement.

D'autre part, le même bouton lors d'un déplacement en translation ou en rotation, parallèlement au plan du support de robinet, donc à une distance constante de celui-ci permet de régler, de façon indépendante, soit le débit, soit le rapport de mélange, par exemple la température, de sortie du fluide.

Enfin, il convient de remarquer que si les deux fonctions précitées à savoir réglage du débit, et réglage du rapport de mélange, sont bien obtenues avec un bouton unique, ces deux fonctions requièrent des déplacements respectifs différents du bouton, soit une translation, soit une rotation. Ceci permet une manipulation simple, aisée, agréable et précise.

Dans une première variante de réalisation selon l'invention, les moyens d'actionnement comprennent ;

. un curseur guidé en translation sur le tiroir dans une direction sensiblement perpendiculaire à la direction longitudinale de la glissère,

. des moyens de liaison en entraînement entre le curseur et le levier autorisant un débattement angulaire entre ces éléments, et

. des moyens d'entraînement en prise avec le curseur d'une part et le bouton de commande d'autre part pour provoquer le déplacement en translation du curseur par rapport au tiroir lorsque le bouton de commande est entraîné en rotation par rapport à celui-ci.

Selon une caractéristique avantageuse de l'invention, les moyens d'entraînement comprennent une crémaillère solidaire du curseur et un pignon denté solidaire de la surface interne du bouton de commande.

Selon une autre caractéristique avantageuse de l'invention, les moyens d'entraînement comprennent au moins un ergot et une rainure adaptée pour recevoir celui-ci, prévus l'un sur le curseur, l'autre sur le bouton de commande, ladite rainure s'étendant généralement du centre de l'élément associé, vers la périphérie de celui-ci.

0112777

Selon une caractéristique alors préférentielle de l'invention, les moyens d'entraînement comportent deux ergots d'une part et deux rainures d'autre part, prévus les uns sur le curseur, les autres sur le bouton de commande, lesdites rainures s'étendant de la périphérie de l'élément associé vers le centre de celui-ci, en débouchant à ce niveau dans un évidement commun de telle sorte que les ergots viennent alternativement en prise avec l'une des rainures et que les ergots pénètrent dans ledit évidement lorsqu'ils échappent aux rainures, vers le centre de l'élément associé.

De préférence, chaque rainure est généralement en forme de spirale.

Selon l'invention, les rainures sont avantageusement prévues sur le bouton de commande tandis que les ergots sont prévus sur le curseur.

Cette première variante de réalisation concerne tout particulièrement les robinets mélangeurs dont l'élément mobile logé dans le corps est adapté pour assurer un réglage du débit de fluide d'une part, du rapport de mélange d'autre part, dans le conduit d'évacuation, lorsque le levier est déplacé par basculement dans des plans respectifs sensiblement orthogonaux entre eux, dont l'un coïncide avec la direction longitudinale de la glissière.

Dans une seconde variante de réalisation conforme à la présente invention, les moyens d'actionnement comprennent un organe d'accouplement adapté pour d'une part lier en rotation le bouton de commande et le levier, d'autre part autoriser une inclinaison relative du levier et du bouton de commande variable en fonction de la position du bouton de commande et du tiroir sur la glissière.

8         0112777

Selon un premier mode de réalisation conforme à l'invention, l'organe d'accouplement est du type joint de cardan.

Selon un second mode de réalisation conforme à la présente invention, l'organe d'accouplement comprend deux membranes reliées par leur périphérie et solidaire l'une du levier, l'autre du bouton de commande.

Selon un troisième mode de réalisation, selon la présente invention, l'organe d'accouplement est formé d'un soufflet.

Plus généralement, selon la présente invention, l'organe d'accouplement est un accouplement élastique ou ressort à faible élasticité en torsion.

Cette seconde variante de réalisation concerne tout particulièrement les robinets mélangeurs dont l'élément mobile logé dans le corps est adapté pour assurer un réglage du débit de fluide, d'une part, du rapport de mélange de fluides d'autre part, dans le conduit d'évacuation, lorsque le levier est déplacé selon deux mouvements respectifs spécifiques, dont l'un correspond à un basculement dans un plan coïncidant avec la direction de la glissière, et l'autre à une rotation autour de l'axe longitudinal du levier.

Selon une autre caractéristique avantageuse de la présente invention, le dispositif de commande comprend en outre des moyens de verrouillage du bouton de commande sur le tiroir adaptés pour guider le bouton poussoir en rotation sur le tiroir.

Selon une autre caractéristique avantageuse de la présente invention, les moyens de verrouillage comprennent une rainure annulaire prévue sur la périphérie interne du bouton de commande et un élément réglable en saillie sur la périphérie du tiroir, qui pénètre dans la rainure.

Selon une autre caractéristique avantageuse de la présente invention, le bouton de commande comprend une paroi circulaire supérieure sur laquelle se raccorde une chemise cylindrique et les dimensions du bouton de commande sont telles que celui-ci recouvre en permanence la totalité des éléments du robinet mélangeur, ainsi que les ouvertures ménagées dans le support du corps de robinet pour autoriser le passage du levier de commande.

Selon une autre caractéristique avantageuse de la présente invention, la paroi interne de la chemise cylindrique sert de butée pour limiter les déplacements en translation du bouton de commande sur la glissière, en venant en appui contre les extrémités de celle-ci

Selon une autre caractéristique avantageuse de la présente invention, la paroi interne de la chemise cylindrique sert de butée de fin de course pour le curseur.

Selon une autre caractéristique avantageuse de la présente invention, les moyens de liaison en entraînement entre le curseur et le levier comprennent un évidement ménagé dans le curseur et adapté pour recevoir avec faible jeu l'une des extrémités, sphérique du levier de commande.

D'autres caractéristiques et avantages de la présente invention apparaîtront à la lecture de la description détaillée qui va suivre et en regard des dessins annexés donnés à titre d'exemples non limitatifs, et sur lesquels :

- la figure 1 représente une vue schématique éclatée, en perspective des principaux organes d'un dispositif de commande conforme à une première variante de réalisation de la présente invention,

- la figure 2 représente une vue en coupe axiale partielle d'un robinet mélangeur équipé d'un dispositif de commande conforme à la première variante de réalisation de la présente invention,

- la figure 3 représente une vue latérale selon la flèche référencée III sur la figure 1, d'un tiroir utilisé dans un dispositif de commande conforme à la présente invention,

- la figure 4 représente une vue latérale selon la flèche référencée IV sur la figure 1, d'une glissière support utilisée dans un dispositif de commande conforme à la présente invention,

- la figure 5 représente une vue de dessous en perspective d'un bouton utilisé dans un dispositif de commande conforme à la première variante de réalisation de la présente invention,

- la figure 6 représente une vue en coupe axiale du même bouton,

- la figure 7 représente une vue de dessous d'un bouton utilisé dans un autre mode de réalisation d'un dispositif de commande conforme à la première variante de la présente invention,

- la figure 8 représente une vue en perspective d'un curseur adapté pour coopérer avec le bouton représenté sur la figure 7,

- la figure 9 représente une vue de dessous d'un bouton utilisé dans un autre mode de réalisation d'un dispositif de commande conforme à la première variante de la présente invention, le curseur associé étant schématiquement illustré en traits interrompus,

- la figure 10 représente une vue en coupe axiale partielle d'un robinet mélangeur équipé d'un bouton de commande du type représenté sur la figure 9, le plan de coupe de la figure 10 étant illustré en X-X sur la figure 9,

- la figure 11 représente une vue en coupe axiale partielle d'un robinet mélangeur équipé d'un dispositif de commande conforme à la seconde variante de réalisation de la présente invention.

0112777

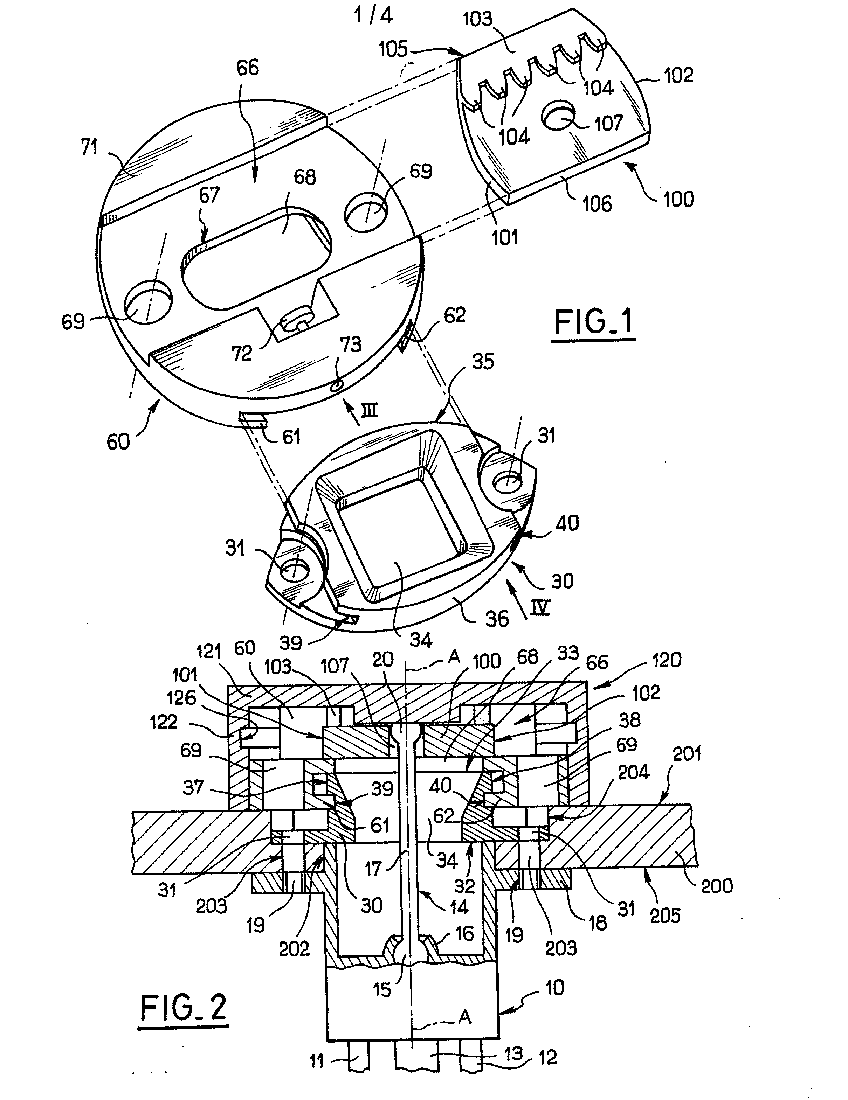

On va dans un premier temps décrire la première variante de réalisation de la présente invention représentée sur les figures 1 à 10 et en particulier le mode de réalisation représenté sur les figures 1 à 5.

On rappellera que cette première variante est adaptée aux robinets mélangeurs dont l'élément mobile logé dans le corps est adapté pour assurer un réglage du débit de fluide d'une part, du rapport de mélange d'autre part, dans le conduit d'évacuation, lorsque le levier est déplacé par pivotement dans des plans respectifs sensiblement orthogonaux entre eux, dont l'un coïncide avec la direction longitudinale de la glissière.

On reconnaît sur la figure 1, une glissière support 30 qui guide, en coulissement par translation, un tiroir 60, coopérant lui-même avec un curseur 100.

Le dispositif mélangeur proprement dit n'a été que partiellement représenté en coupe sur la figure 2. Celui-ci porte la référence générale 10.

Dans le cas d'un mélangeur à plaques, les plaques fixe et mobile précitées , classiques, sont logées dans le boîtier non coupé du mélangeur 10 et ne sont pas visibles sur cette figure. Plus précisément, dans le cas le plus général des plaques planes, la plaque mobile est guidée pour se déplacer en appui contre la plaque fixe, dans un plan sensiblement parallèle à la surface extérieure 201 du support 200 de robinet.

Le dispositif mélangeur et les plaques ne seront pas décrites plus en détail et l'on se reportera utilement aux documents précités pour la bonne compréhension de leur structure et de leur coopération.

Les conduits d'arrivée d'eau chaude et d'eau froide débouchant en regard des orifices d'entrée de la chambre de mélange sont référencés 11 et 12, et le conduit de sortie d'eau partant de l'orifice de sortie de la chambre de mélange est référencé 13 sur la figure 2.

Le levier de commande 14 généralement cylindrique et allongé est muni d'une rotule sphérique intermédiaire 15 qui est logée, libre de mouvement autour de son centre, dans une coupelle sphérique complémentaire 16, solidaire du corps de mélangeur 10.

Le levier de commande 14, dont l'axe est référencé A-A sur la figure 2, est représenté en position médiane. Bien entendu la forme de la coupelle sphérique 16 est adaptée pour autoriser un certain débattement angulaire, dans l'espace, autour de la position représentée sur cette figure 2.

Un bras supérieur 17 du levier 14, solidaire de la rotule émerge à la partie supérieure du mélangeur 10. L'extrémité supérieure de ce bras 17 coopère avec le dispositif de commande tel que cela sera décrit par la suite.

A l'opposé du bras supérieur 17, par rapport à la rotule 15, il est prévu un second bras (non visible sur la figure 2), qui vient en prise avec l'élément mobile, ou un organe intermédiaire solidaire fonctionnellement de celui-ci, pour assurer son déplacement lorsque le levier de commande 14 est pivoté autour de la rotule 15.

Tel que cela est représenté sur la figure 2, le corps, de préférence cylindrique, du mélangeur 10 est partiellement introduit dans un alésage cylindrique 202 ménagé dans le support 200.

De plus, le corps du mélangeur 10 est muni d'une collerette extérieure plane 18 destinée à venir en appui contre la surface inférieure 205 du support 200. Le corps du mélangeur peut ainsi être immobilisé grâce à des vis (non représentées) engagées dans des orifices 31 prévus dans la glissière support 30, des orifices 203 ménagés dans le support 200, et venant en prise dans des alésages filetés 19 prévus dans la collerette 18.

Pour des raisons qui apparaîtront plus clairement par la suite, il est ainsi prévu de préférence deux orifices 31, 203 et 19, diamétralement opposés par rapport à l'axe du dispositif (cet axe coïncide avec l'axe A-A selon la représentation de la figure 2).

Pour faciliter l'explication qui va suivre, on supposera que les plaques fixe et mobile sont disposées dans le mélangeur 10 de telle sorte que lorsque le levier de commande 14 est basculé parallèlement au plan de la figure 2, on règle la température avec un débit constant, tandis que quand le levier de commande 14 est basculé perpendiculairement au plan de la figure 2, on règle le débit avec une température constante.

Le cas échéant, si le mélangeur proprement dit est formé d'une capsule indépendante logée dans un carter tubulaire, il sera bien entendu indispensable de prévoir des moyens immobilisant en rotation et en position appropriée la capsule et le carter.

Tel que cela est représenté sur les figures 1 et 2, la glissière support 30, solidaire du corps de robinet 10 grâce aux orifices 31, est définie par une enveloppe délimitée généralement par deux plans 32, 33 parallèles entre eux et deux secteurs de cylindre convexes 35, 36 s'intersectant, d'axes perpendiculaires auxdits plans.

La glissière support 30 est munie d'un orifice central 34 de section généralement carrée qui relie les deux faces planes 32 et 33 de la glissière. Plus précisément, tel que cela est représenté sur la figure 2, sur une partie de sa hauteur adjacente à la face 32

0112777

reposant contre le fond d'un évidement complémentaire 204 prévu dans le support 200, l'orifice 34 présente une section constante tandis que sur le reste de sa hauteur, débouchant au niveau de la face supérieure 33, l'orifice présente des dimensions croissantes en direction de cette dernière.

Une telle disposition a bien entendu pour but de permettre le basculement du levier de commande 14.

D'autre part, la glissière 30 présente à chacune de ses extrémités effilées, et sur une partie de sa hauteur, une paroi plane 37, 38 perpendiculaire aux faces 32 et 33 et à la corde de chacune des parois 35 et 36 en forme de secteur de cylindre. Au niveau de ces parois 37, 38, la glissière est munie d'une rainure rectiligne respective 39, 40 parallèle aux faces 32 et 33 et destinée à recevoir une nervure complémentaire associée 61, 62 présentée par le tiroir 60.

Les orifices 31 précités sont prévus au niveau des parties les plus effilées de l'embase de la glissière 30, sur l'extérieur des parois 37, 38.

On va maintenant décrire la structure du tiroir 60 en regard des figures 1 à 3. Ce dernier est délimité d'une façon générale par une enveloppe cylindrique. Le tiroir 60 est muni au niveau de sa surface circulaire inférieure 70 d'une rainure rectiligne 63 parallèle à la face 70 et dont l'axe de symétrie passe par l'axe de révolution du tiroir 60. Au niveau des deux parois 64, 65 en regard de la rainure 63 sont prévues les deux nervures 61 et 62 rectilignes et de forme complémentaire des rainures 39 et 40 de la glissière 30.

On comprend aisément que les dimensions et dispositions relatives de ces deux pièces, tiroir 60 et glissière 30, peuvent aisément être adaptées pour permettre un guidage en translation du tiroir 60 sur la glissière 30, perpendiculaire au plan de la figure 2.

0112777

En outre, au niveau de sa face circulaire supérieure 71, le tiroir est muni d'une seconde rainure 66 rectiligne, parallèle à la face 71, s'étendant perpendiculairement à la première rainure 63.

Les profondeurs des rainures 63 et 66 sont de préférence déterminées de telle sorte qu'une cloison 67 demeure entre celles-ci.

Dans cette paroi 67 sont ménagés d'une part un orifice oblong 68, d'autre part, de part et d'autre de celui-ci, deux orifices traversants 69.

Ces derniers qui sont prévus au voisinage des extrémités respectives de la rainure 66 ont pour but de permettre l'accès aux vis engagées dans les orifices 31, 203 et 19.

L'orifice oblong 68, quant à lui, est ménagé dans la paroi 67, de telle sorte que sa grande dimension soit obtenue parallèlement à la direction de la rainure 66. La longueur de l'orifice 68 est déterminée pour permettre un basculement adéquat du levier de commande 14 engagé dans celui-ci, pour permettre un réglage de la température du fluide.

Le curseur 100 qui est porté libre de translation dans la rainure 66 est formé d'un corps généralement parallélépipédique de faible épaisseur dont deux faces latérales opposées 101, 102 sont formées plus précisément de secteurs de cylindre convexes.

De préférence, ces faces 101 et 102 possèdent un rayon de courbure égal à celui du tiroir 60. Il en est de même des parois 35 et 36 de la glissière support 30.

La distance séparant les deux autres faces latérales opposées 105 et 106 du curseur 100 est bien entendu au plus égale à la largeur de la rainure 66 de telle sorte que cette dernière puisse guider en translation le curseur 100.

En outre, sur sa surface supérieure et le long d'un bord rectiligne libre, le curseur 100 est muni d'une crémaillère 103, les dents 104 de la crémaillère étant dirigées vers l'autre bord libre rectiligne de la face supérieure du curseur 100.

D'autre part, tel que cela est représenté sur la figure 1, le curseur 100 est muni d'un alésage cylindrique 107 traversant, reliant ses faces planes supérieure et inférieure, et d'axe perpendiculaire à celles-ci, alésage 107 qui reçoit l'extrémité supérieure du levier. Plus précisément, l'alésage 107 est ménagé en position centrée par rapport aux deux faces latérales cintrées 101, 102 et en position centrée par rapport au fond des dentures 104 précitées, et au bord rectiligne libre opposé à celles-ci.

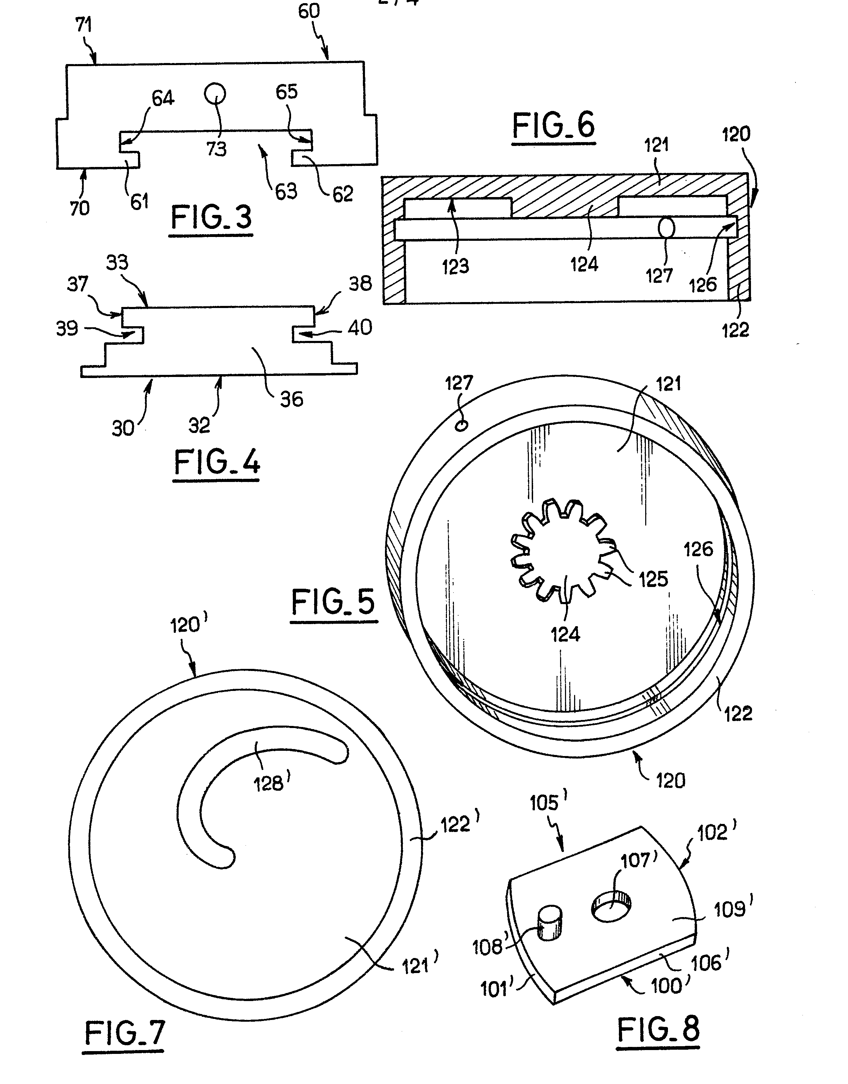

Tel que cela est représenté sur les figures 5 et 6, le bouton de commande extérieur 120 est formé d'une paroi circulaire supérieure 121 sur laquelle se raccorde une chemise cylindrique 122 qui lui est coaxiale.

Les dimensions du bouton 120, et en particulier la hauteur et le diamètre interne de la chemise cylindrique 122, seront aisément déterminés de telle sorte que ce bouton 120 recouvre en permanence la totalité des éléments de commande et en particulier le curseur 100, le tiroir 60 et la glissière support 30, ainsi que les ouvertures, telles que l'évidement 204 ménagé dans le support 200 , pour autoriser le passage du levier de commande 14 et éventuellement de la capsule formant le mélangeur proprement dit.

De cette façon, le robinet mélangeur équipé de son dispositif de commande se présente extérieurement uniquement sous l'aspect du bouton de commande 120, dont les forme et couleur peuvent être aisément étudiées pour s'adapter à l'environnement. De ce fait, un tel dispositif donne pleinement satisfaction sur le plan esthétique.

D'autre part, tel que cela est représenté sur les figures 5 et 6, le bouton 120 est muni sur la surface inférieure 123 de la paroi cylindrique supérieure 121, d'un pignon 124 muni de dentures extérieures 125, adaptées pour coopérer par engagement, avec les dentures 104 de la crémaillère 103.

On comprendra aisément, à l'étude des dessins annexés, que la crémaillère 103 doit être positionnée sur le curseur 100, de telle sorte que la distance séparant le fond des dentures 104 de l'axe de l'alésage 107 soit de préférence sensiblement supérieure à la distance séparant l'enveloppe externe des dentures 125 du centre du pignon 124, pour permettre une coopération correcte entre ces deux éléments.

Il résulte de ce qui précède que l'alésage 107 prévu dans le curseur 100 est décentré par rapport aux faces latérales planes 105, 106 du curseur 100, et les centres de courbure des faces latérales cintrées 101, 102 ne sont pas symétriques par rapport auxdites faces planes latérales 105, 106, mais situés dans un plan parallèle à ces dernières, et passant par l'axe de l'orifice cylindrique 107.

D'autre part, la rainure 66 prévue au niveau de la face supérieure du tiroir 60 est également décentrée par rapport à l'axe de révolution de celui-ci. L'amplitude d'un tel décentrement est déterminée par l'épaisseur de la crémaillère séparant la surface latérale plane 105 du fond des dentures 104.

Bien entendu, la hauteur du pignon 124 est déterminée de telle sorte que celui-ci engrène avec la crémaillère 103, sans venir en appui contre la face supérieure plane du curseur 100.

Il apparaitra clairement à l'examen en particulier des figures 1 et 2, que lorsque les différents organes du dispositif de commande conforme à la présente invention sont assemblés, en agissant sur le bouton extérieur 120, pour déplacer celui-ci en translation perpendiculairement au plan de la figure 2, on entraîne le tiroir 60, en translation rectiligne sur la glissière support 30, dans une même direction. La face interne de la chemise cylindrique 122 sert de butée pour limiter un tel déplacement de translation. En effet, cette surface interne vient elle-même en appui, alternativement contre les faces cintrées 35, 36 complémentaires de la glissière support, lors d'une translation perpendiculairement au plan de la figure 2. Lors d'un tel déplacement, le curseur 100 étant immobilisé dans la rainure 66, on comprend aisément que l'on peut, à température constante, régler le débit du fluide de sortie grâce au basculement induit du levier dans un plan perpendiculaire au plan de la figure 2.

L'amplitude d'une telle translation est délimitée par la différence existant entre le diamètre du tiroir 60 et la distance séparant les génératrices les plus extérieures des parois cintrées 35 et 36 de la glissière support 30. Cette dernière distance, et donc la forme particulière de la glissière support 30 seront aisément déterminées de telle sorte que l'amplitude de la translation en question, permette un réglage approprié du débit de fluide. Un tel réglage tient compte notamment de la structure des plaques fixe et mobile du mélangeur 10, et du rapport entre les longueurs des bras supérieur et inférieur du levier de commande 14.

Quelle que soit la position du tiroir 60, sur le déplacement en translation précité, on comprend d'autre part que toute action entraînant le bouton 120 en rotation autour de l'axe du tiroir cylindrique 60, provoque grâce à la coopération entre le pignon denté 124 et la crémaillère 103, un déplacement en translation du curseur 100 selon une seconde direction rectiligne, parallèle au plan de la figure 2, et donc perpendiculaire à la direction de déplacement du tiroir 60 lui-même, dans la rainure 66 de celui-ci. Il convient de remarquer que les deux directions de déplacement rectiligne du tiroir 60 et du curseur 100 définissent un plan sensiblement parallèle au plan de déplacement de la plaque mobile du mélangeur 10.

Un tel déplacement en translation du curseur 100 dans la rainure 66, provoque un basculement du levier de commande 14 parallèlement au plan de la figure 2, et assure donc un réglage de la température du fluide de sortie à débit constant.

Là encore, l'amplitude de déplacement du curseur 100 dans la rainure 66 est déterminée par la différence existant entre le diamètre du tiroir 60 et la distance séparant les génératrices les plus extérieures des faces cintrées 101 et 102 du curseur 100. Les dimensions relatives de ces éléments seront donc aisément déterminées pour permettre un réglage approprié du mélangeur 10.

De plus, la surface interne de la chemise cylindrique 122 sert de butée pour limiter le déplacement en translation du curseur 100. En effet, lorsque ce dernier se trouve à l'une des extrémités de la rainure 66, l'une de ses surfaces cintrées 101, 102 vient en appui contre la surface interne de la chemise cylindrique 122, et prolonge la paroi cylindrique du tiroir 60.

Tel que cela est représenté en particulier sur la figure 2, l'extrémité supérieure 20 du bras 17 du levier de commande 14, pénétrant dans l'orifice cylindrique 107 du curseur 100, est de préférence, de forme sphérique, de façon à permettre une coopération correcte, sans grippage ni friction, entre ces éléments, quelle que soit l'inclinaison du levier de commande 14 par rapport au curseur 100. Le bouton 120 est d'autre part, de préférence, muni de moyens de verrouillage aptes à retenir celui-ci sur les organes du dispositif de commande, et en particulier sur le tiroir 60. Selon le mode de réalisation représenté sur les figures, il est ainsi prévu une rainure annulaire 126, sur la surface interne de la chemise cylindrique 122. Cette rainure 126 est destinée à recevoir l'extrémité d'une vis 72, engagée dans un alésage fileté 73 prévu dans le tiroir 60, perpendiculairement à la paroi cylindrique de celui-ci. Pour permettre l'engagement de la vis 72 dans la rainure 126, le bouchon 120 présente de préférence, au niveau de la rainure 126, un orifice traversant 127 permettant le passage d'un outil susceptible d'agir sur l'extrémité de la vis 72, pour entraîner, par rotation, la mise en saillie de celle-ci, au-delà de la paroi cylindrique du tiroir 60, et donc la pénétration de cette vis 72 dans la rainure 126.

Le cas échéant, afin de parfaire l'esthétique extérieure du dispositif de commande, on peut recouvrir le bouton de commande d'une garniture appropriée, maintenue sur celui-ci, à l'aide de tous moyens classiques appropriés, tels que par enclipsage. Une telle garniture permet en particulier de recouvrir l'orifice 127 précité.

Bien entendu, la forme spécifique de la glissière support 30 du tiroir 60 et du curseur 100, qui vient d'être décrite n'est aucunement limitative, et pourra faire l'objet de nombreuses adaptations.

On va maintenant décrire le mode de réalisation représenté sur les figures 7 et 8. Les éléments représentés sur ces figures similaires à ceux représentés sur les figures 1 à 5 porteront des références numériques identiques assorties d'un indice "'".

Tel que cela est représenté sur les figures 7 et 8, on peut remplacer le curseur 100 précité, par un curseur 100' représenté sur la figure 8, dépourvu de crémaillère 103, mais muni d'un ergot 108', en saillie sur sa surface supérieure 109'. Pour le reste, le curseur 100' possède une forme générale semblable au curseur 100 précédemment décrit, à ceci près que l'orifice traversant 107' peut être centré par rapport aux faces latérales planes 105' et 106'. Il en est de même de l'ergot 108'. Dans ces conditions, les centres de courbure des surfaces cintrées latérales 101' et 102' du curseur 100' peuvent être disposés dans un plan médian de symétrie du curseur 100', parallèle aux faces 105', 106', et à distance égale de chacune de celles-ci.

Le bouton 120' représenté sur la figure 7 doit être adapté en conséquence, et comporter alors une rainure 128', ménagée sur la surface interne de la paroi circulaire supérieure 121'. Plus précisément, cette rainure 128' est dirigée généralement du centre de la paroi 121', vers la périphérie de celle-ci. Selon le mode de réalisation représenté sur la figure 7, cette rainure 128' est en forme de spirale. La forme particulière de cette rainure 128' sera aisément déterminée par l'homme de l'art en fonction du rapport souhaité entre l'amplitude de la rotation du bouton 120' et de la translation rectiligne du curseur 100'.

Pour le reste, le bouton 120' est en tous points conformes au bouton 120 précédemment décrit.

Là encore, on comprendra aisément à l'examen des figures 7 et 8, que toute rotation du bouton 120', provoque un déplacement en translation rectiligne du curseur 100' dans la rainure 66 du tiroir 60 et donc un basculement du levier de commande 17 dans un plan passant par la direction de translation du curseur.

Par ailleurs, lors d'un déplacement en translation du bouton de commande 120 sur la glissière support 30, le curseur 100' suit le mouvement de translation induit du tiroir 60, et de ce fait provoque un basculement du levier de commande 17 dans un plan passant par la direction de translation du bouton de commande 120.

Le fonctionnement de ce mode de réalisation, en ce qui concerne le dispositif mélangeur proprement dit est donc similaire à celui évoqué en regard des figures 1 à 5.

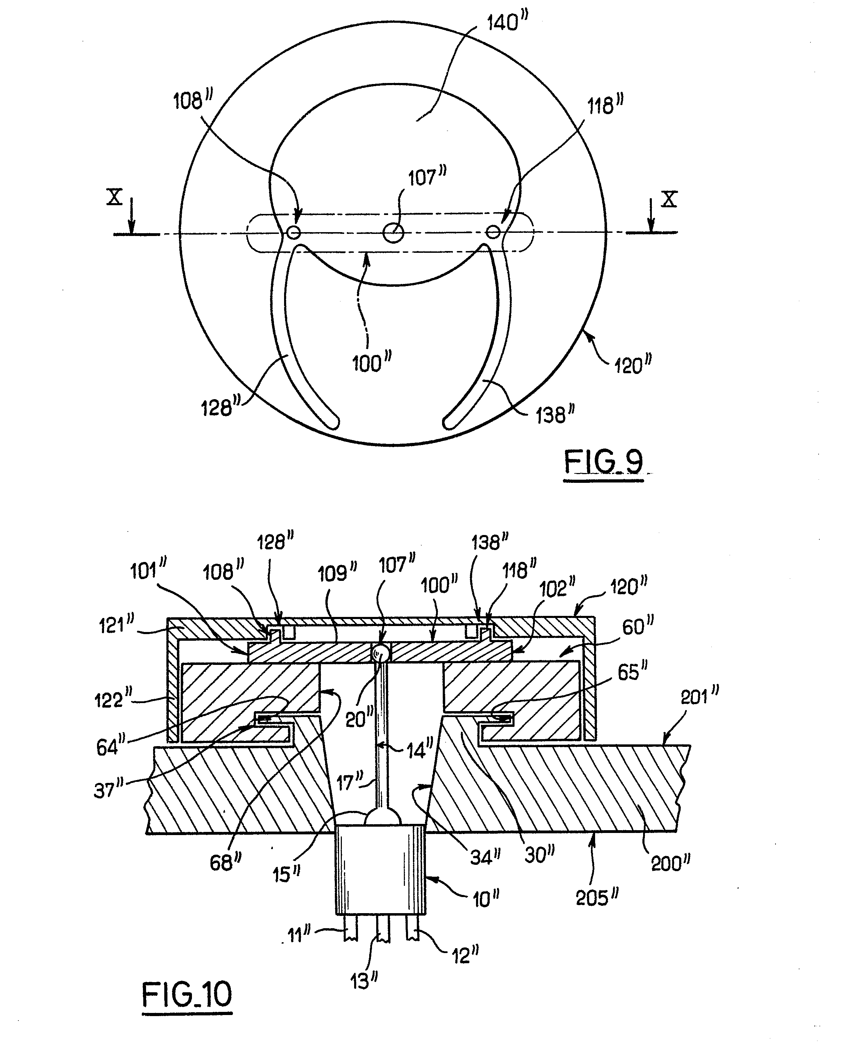

On va maintenant décrire le mode de réalisation représenté sur les figures 9 et 10.

Les éléments représentés sur ces figures, similaires à ceux représentés sur les figures 1 à 8 porteront des références numériques identiques assorties d'un incidence ".

Selon le mode de réalisation représenté sur ces figures, le curseur 100" est muni de deux ergots 108", 118", en saillie sur sa surface supérieure 109".

Pour le reste, le curseur 100" possède une forme générale semblable au curseur 100' représenté sur la figure 8, et comporte en particulier un orifice traversant central 107" adapté pour recevoir l'extrémité supérieure 20", généralement sphérique, du levier de commande 14". De plus, le bouton de commande 120" représenté schématiquement sur la figure 9 comporte alors deux rainures 128", 138" qui sont adaptées pour recevoir alternativement les ergots 108" et 118", lors de la rotation du bouton de commande 120" sur le tiroir 60".

Plus précisément, les rainures 128" et 138" s'étendent de la périphérie du bouton de commande 120" vers le centre de celui-ci, en débouchant, au voisinage dudit centre, dans un évidement commun 140" adapté pour recevoir les ergots lorsque ceux-ci échappent aux rainures 128", 138", vers le centre du bouton.

Là encore, les rainures 128"et 138" ont la forme générale d'une spirale et sont de préférence symétriques par rapport à un plan passant par l'axe de révolution du bouton de commande.

L'homme de l'art comprendra ainsi que lorsque l'ergot 108" se déplace dans la rainure 128", le second ergot 118" se déplace dans l'évidement 140", et inversement, lorsque le second ergot 118" se déplace dans la rainure associée 138", le premier ergot 108" se déplace dans l'évidement 140".

De ce fait, on évite que la translation du curseur 100" soit provoquée par la coopération d'un ergot et d'une rainure, dans une zone de celle-ci proche du centre du bouton de commande 120". En conséquence, l'utilisation de deux ergots 108" et 118", et de deux rainures associées 128", 138", en comparaison avec le mode de réalisation représenté sur les figures 7 et 8 permet de limiter les efforts nécessaires pour assurer le déplacement du bouton 120" et du curseur 100".

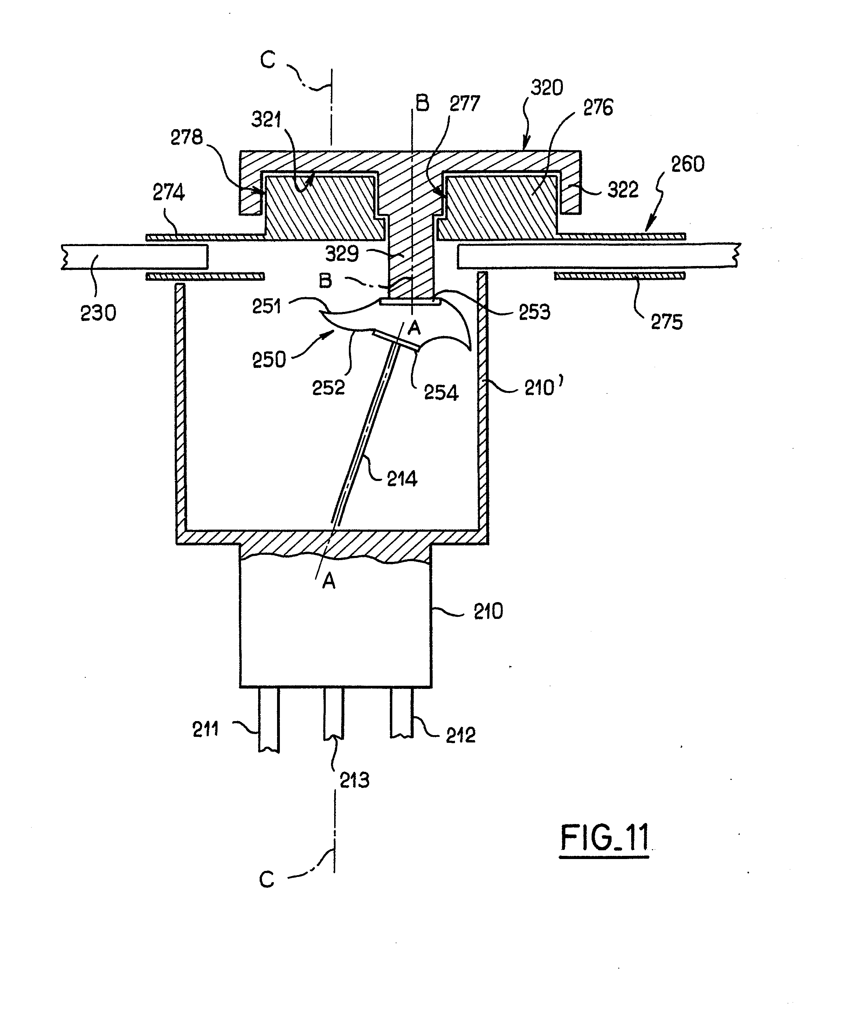

On va maintenant décrire la seconde variante de réalisation conforme à la présente invention représentée schématiquement sur la figure 11.

Les éléments représentés sur cette figure similaires à ceux représentés sur les figures 1 à 10 porteront des références numériques incrémentées de 200 par rapport à ces derniers.

On rappellera que le dispositif de commande conforme à la seconde variante de réalisation représentée sur la figure 11 est adaptée pour coopérer avec les robinets mélangeurs dont l'élément mobile logé dans le corps est adapté pour assurer un réglage du débit de fluide, d'une part, du rapport de mélange de fluide d'autre part, dans le conduit d'évacuation, lorsque le levier 214 est déplacé selon deux mouvements respectifs spécifiques, dont l'un correspond à un basculement dans un plan coïncidant avec la direction de la glissière 230 et l'autre à une rotation autour de l'axe longitudinal

A-A du levier 214.

On reconnaît sur la figure 11, une glissière support 230 qui guide en coulissement par translation, parallèlement au plan de la figure 11, un tiroir 260 supportant lui-même à rotation un bouton de commande 320, autour d'un axe B-B normal à la glissière.

Le dispositif mélangeur proprement dit n'a été que partiellement représenté sur la figure 11. Celui-ci porte la référence générale 210, les conduits d'arrivée de fluide étant référencés 211 et 212 et le conduit d'évacuation de fluide étant référencé 213.

Le corps du robinet mélangeur 210 définissant la chambre de mélange est prolongé par une chemise cylindrique ou équivalente 210', raccordée par l'intermédiaire de moyens non représentés à la glissière 230. Le levier de commande 214 est ainsi libre de basculement à l'intérieur de l'espace délimité par la chemise cylindrique 210'.

En l'espèce, selon le mode de réalisation représenté sur la figure 11, la glissière support 230 est formée simplement de tiges profilées, par exemple de section cylindrique , diamétralement opposées, et alignées de part et d'autre de l'axe référencé C-C du corps de mélangeur.

Le tiroir 260 est alors engagé par l'intermédiaire de manchons 274, 275, généralement complémentaires de la section de la glissière 230, de telle sorte que le tiroir 260 puisse être déplacé en translation le long de la glissière 230, c'est-à-dire en l'espèce parallèlement au plan de la figure 11.

Les manchons 274 et 275 sont ainsi prévus, en alignement de part et d'autre d'une embase 276 d'enveloppe générale cylindrique de révolution autour d'un axe

25

0112777

perpendiculaire à la direction longitudinale des manchons 274, 275 et de la glissière 230. L'embase 276 est munie d'un alésage central 277 d'axe B-B correspondant à l'axe de révolution de l'enveloppe extérieure 278.

Dans cet alésage central 277 est engagée une tige cylindrique 329 en saillie sur la surface interne 321 du bouton de commande 320, perpendiculairement à cette dernière, et au centre de celle-ci. Le bouton de commande 320 est par ailleurs, de façon similaire au mode de réalisation précédemment décrit, composé d'une paroi circulaire supérieure sur laquelle se raccorde une chemise cylindrique 322 qui lui est coaxiale.

L'extrémité libre de la tige 329 est reliée par l'intermédiaire d'un organe d'accouplement 250 à l'extrémité libre en regard du levier de commande 214.

Plus précisément, selon l'invention, l'organe d'accouplement 250 est adapté pour d'une part lier en rotation le bouton de commande 320 et le levier 214, d'autre part autoriser une inclinaison de la tige du levier 214 et du bouton de commande 320 variable en fonction de la position du bouton de commande 320 et du tiroir 260 sur la glissière 230.

L'organe d'accouplement 250 peut être constitué de tout système assurant une liaison en rotation entre la tige 329 et le levier de commande 214 tout en autorisant une angulation relative de ces éléments.

A titre d'exemples, on citera comme élément susceptible de former l'organe d'accouplement 250, les systèmes du type joint de cardan, en particulier joint de Hooke, les éléments à souffler, les systèmes à entraînement par tocs et doigts simples ou par des dentures, ou encore d'une façon plus générale, tout type d'accouplement élastique ou ressort à faible élasticité en torsion.

Toutefois, selon un mode de réalisation avantageux représenté sur la figure 11, l'organe d'accouplement 250 est formé de deux membranes déformables 251 et 252 reliées respectivement, en leur centre, à l'extrémité libre de la tige 329 solidaire du bouton de commande 320 et à l'extrémité libre du levier de commande 214, à l'aide de moyens schématiquement représentés en 253 et 254 d'une part, et au niveau de leur périphérie d'autre part.

Lesdites membranes 251 et 252 pourront prendre différentes formes. Celles-ci pourront en particulier être planes, tronconiques, ou encore sphéroïdales, en étant si nécessaire, ondulées.

Quel que soit le mode de réalisation retenu pour l'organe d'accouplement, on comprendra que lors du déplacement en translation du bouton de commande 320 et du tiroir 260, sur la glissière support 230, le levier de commande 214 est basculé dans un plan parallèle au plan de la figure 11 pour régler l'un des paramètres débit / rapport de mélange, en conservant l'autre paramètre constant.

Inversement, lorsque le bouton de commande 320 est entraîné en rotation autour de l'axe B-B par rapport au tiroir 260, l'angle d'inclinaison relative entre la tige 329 et le levier de commande 214 est maintenu constant par l'intermédiaire de l'organe d'accouplement 250, mais cependant l'entraînement en rotation du bouton 320 est répercuté au niveau du commande 214 pour régler ledit autre paramètre précité tout en maintenant constant le paramètre premier nommé.

Bien entendu, la présente invention n'est aucunement limitée aux modes de réalisation qui viennent d'être décrits mais s'étend à toute variante conforme à son esprit.

REVENDICATIONS

1. Dispositif de commande d'un robinet mélangeur de fluides du type comprenant un corps (10 ; 210) qui définit une chambre de mélange et qui comporte des orifices d'entrée reliés à des conduits respectifs (11, 12 ; 211, 212) d'alimentation en fluides, et un orifice de sortie relié à un conduit d'évacuation (13 ; 213), ledit corps logeant, interposé entre les orifices d'entrée et l'orifice de sortie, un élément mobile apte à définir un recouvrement variable des orifices d'entrée, lié au déplacement de l'organe mobile induit par un levier de commande (14 ; 214) articulé sur le corps de robinet, pour régler le débit de fluide dans le conduit d'évacuation lorsqu'un premier mouvement du levier est sollicité et pour régler le rapport de mélange de fluides dans ledit conduit d'évacuation lorsqu'un second mouvement du levier est sollicité, caractérisé par le fait qu'il comprend :

- une glissière support (30 ; 230) rectiligne, fixe, solidaire du corps (10 ; 210) de robinet, qui guide en translation,

- un tiroir (60 ; 260) adapté pour supporter

- un bouton de commande (120 ; 320), libre de rotation autour d'un axe normal à la direction longitudinale de la glissière (30 ; 230) mais lié en translation avec le tiroir (60 ; 260), et

- des moyens d'actionnement (100, 103, 124, 125 ; 108', 128' ; 108", 118", 128", 138" ; 250) intercalés entre le bouton de commande (120 ; 320) et le levier de commande (14 ; 214), adaptés pour solliciter l'un des mouvements du levier (14 ; 214) lorsque le bouton de commande (120 ; 320) et le tiroir (60 ; 260) sont

déplacés en translation le long de la glissière (30;230) et pour solliciter l'autre mouvement lorsque le bouton de commande (120 ; 320) est pivoté, par rapport au tiroir (60 ; 260),autour de son axe de rotation.

2. Dispositif de commande selon la revendication 1, caractérisé par le fait que les moyens d'actionnement comprennent .

. un curseur (100) guidé en translation sur le tiroir (60) dans une direction sensiblement perpendiculaire à la direction longitudinale de la glissière (30)

. des moyens (107) de liaison en entraînement entre le curseur (100) et le levier (14) autorisant un débattement angulaire entre ces éléments, et

. des moyens d'entraînement (103, 124 ; 108', 128'; 108", 118", 128", 138") en prise avec le curseur (100; 100'; 100") d'une part et le bouton de commande (120) d'autre part pour provoquer le déplacement en translation du curseur (100 ; 100' ; 100") par rapport au tiroir (60) lorsque le bouton de commande est entraîné en rotation par rapport à celui-ci.

3. Dispositif de commande selon la revendication 2, caractérisé par le fait que les moyens d'entraînement comprennent une crémaillère (103) . solidaire du curseur (100) et un pignon denté (124) solidaire de la surface interne du bouton de commande (120).

4. Dispositif de commande selon la revendication 2 , caractérisé par le fait que les moyens d'entraînement comprennent au moins un ergot (108') et une rainure (128') adaptée pour recevoir celui-ci, prévus l'un sur le curseur (100'),l'autre sur le bouton de commande (120), ladite rainure (128') s'étendant généralement du centre de l'élément associé, vers la périphérie de celui-ci.

5. Dispositif de commande selon la revendication 4, caractérisé par le fait que les moyens d'entraînement comportent deux ergots (108", 118") d'une part et deux rainures (128", 138") d'autre part, prévus les uns sur le curseur (100"), les autres sur le bouton de commande (120"), lesdites rainures (128", 138") s'étendant de la périphérie de l'élément associé vers le centre de celui-ci, en débouchant à ce niveau dans un évidement (140") commun de telle sorte que les ergots (108", 118") viennent alternativement en prise avec l'une des rainures (128", 138") et que les ergots pénètrent dans ledit évidement (140") lorsqu'ils échappent aux rainures, vers le centre de l'élément associé.

6. Dispositif de commande selon l'une des revendications 4 et 5, caractérisé par le fait que chaque rainure (128'; 128", 138") est généralement en forme de spirale.

7. Dispositif de commande selon l'une des revendications 4 à 6, caractérisé par le fait que les rainures (128'; 128", 138") sont prévues sur le bouton de commande (120) tandis que les ergots (108'; 108", 118") sont prévus sur le curseur.

8. Dispositif de commande selon l'une des revendications 1 à 7, caractérisé par le fait que l'élément mobile logé dans le corps est adapté pour assurer un réglage du débit de fluide d'une part, du rapport de mélange d'autre part, dans le conduit d'évacuation, lorsque le levier (14) est déplacé par basculement dans des plans respectifs sensiblement orthogonaux entre eux, dont l'un coïncide avec la direction longitudinale de la glissière (30).

9. Dispositif de commande selon la revendication 1, caractérisé par le fait que les moyens d'actionnement comprennent un organe d'accouplement (250) adapté pour d'une part lier en rotation le bouton de commande (320) et le levier (214), d'autre part autoriser une inclinaison relative du levier (214) et du bouton de commande (320) variable en fonction de la position du bouton de commande (320) et du tiroir sur la glissière (230).

10. Dispositif de commande selon la revendication 9, caractérisé par le fait que l'organe d'accouplement (250) est du type joint de cardan.

11. Dispositif de commande selon la revendication 9, caractérisé par le fait que l'organe d'accouplement (250) comprend deux membranes (251, 252) reliées par leur périphérie et solidaire l'une du levier (214), l'autre du bouton de commande (320).

12. Dispositif de commande selon la revendication 9, caractérisé par le fait que l'organe d'accouplement (250) est formé d'un soufflet.

13. Dispositif de commande selon la revendication 9, caractérisé par le fait que l'organe d'accouplement (250) est un accouplement élastique ou ressort à faible élasticité en torsion.

14. Dispositif de commande selon l'une des revendications 9 à 13, caractérisé par le fait que l'élément mobile logé dans le corps est adapté pour assurer un réglage du débit de fluide, d'une part, du rapport de mélange de fluides d'autre part, dans le conduit d'évacuation, lorsque le levier (214) est déplacé selon deux mouvements respectifs spécifiques, dont l'un correspond à un basculement dans un plan coïncidant avec la direction de la glissière (230), et l'autre à une rotation autour de l'axe longitudinal (A-A) du levier (214).

15. Dispositif de commande selon l'une des revendications 1 à 14, caractérisé par le fait qu'il comprend en outre des moyens de verrouillage (126, 127, 72) du bouton de commande (120) sur le tiroir (60) adaptés pour guider le bouton poussoir en rotation sur le tiroir.

16. Dispositif de commande selon la revendication 15, caractérisé par le fait que les moyens de verrouillage comprennent une rainure annulaire (126) prévue sur la périphérie interne du bouton de commande (120) et un élément réglable en saillie (72) sur la périphérie du tiroir (60), qui pénètre dans la rainure (126).

17. Dispositif de commande selon l'une des re - vendications 1 à 16, caractérisé par le fait que le bouton de commande (120 ; 320) comprend une paroi circulaire supérieure (121; 321) sur laquelle se raccorde une chemise cylindrique (122 ; 322) et par le fait que les dimensions du bouton de commande sont telles que celui-ci recouvre en permanence la totalité des éléments du robinet mélangeur (30, 60, 100; 230, 260), ainsi que les ouvertures (204) ménagées dans le support (200) du corps de robinet pour autoriser le passage du levier de commande (14 ; 214).

18. Dispositif selon la revendication 17, caractérisé par le fait que la paroi interne de la chemise cylindrique (122) sert de butée pour limiter les déplacements en translation, du bouton de commande sur la glissière, en venant en appui contre les extrémités (35, 36) de celle-ci.

19. Dispositif de commande selon l'une des revendications 17 et 18 prise en combinaison avec la revendication 2, caractérisé par le fait que la paroi interne de la chemise cylindrique (122) sert de butée de fin de course pour le curseur (100 ; 100' ; 100").

20. Dispositif de commande selon l'une des revendications 2 à 8, caractérisé par le fait que les moyens de liaison en entraînement entre le curseur (100 ; 100' ; 100") et le levier (14) comprennent un évidement (107) ménagé dans le curseur et adapté pour recevoir avec faible jeu l'une des extrémités (20),
sphérique du levier de commande (14).

BAD ORIGINAL

0112777

1/4

FIG_1

FIG_2

FIG_3

FIG_4

FIG_6

FIG_5

FIG_7

FIG_8

FIG.9

FIG.10

FIG. 11

## Office européen des brevets

# RAPPORT DE RECHERCHE EUROPEENNE

0112777

Numéro de la demande

EP 83 40 2502

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,A | FR-A-2 208 499 (MORISSEAU) <br> * page 4, ligne 16 - pagea 6, ligne 3; figures * | 1 | F 16 K 11/06 <br> F 16 K 31/60 |
| | --- | | |
| D,A | FR-A-2 400 654 (ROKAL ARMATUREN) <br> * page 4, ligne 26 - page 5, ligne 2; figures * | 1 | |
| | --- | | |
| D,A | FR-A-2 301 756 (SOCIETE GENERALE DE FONDERIE) <br> ----- | | |

| DOMAINES TECHNIQUES RECHERCHES (Int. Cl. ³) |
|---|
| F 16 K |

Le présent rapport de recherche a été établi pour toutes les revendications

| Lieu de la recherche <br> LA HAYE | Date d'achèvement de la recherche <br> 30-03-1984 | Examinateur <br> VAN REETH A.L.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82